# EUROPÄISCHE PATENTANMELDUNG

(11) **EP 3 070 638 A1**
(43) Veröffentlichungstag der Anmeldung: **21.09.2016**
(21) Anmeldenummer: 15160024.4
(22) Anmeldetag: 20.03.2015
(51) Int. Cl.: G06K 7/10

(54) **Schließeinrichtung und Verfahren zum Kontaktieren eines Transponders mit einer Schließeinrichtung**

(71) Anmelder: BKS GmbH, D-42549 Velbert (DE)
(72) Erfinder: Dr. Braam, Reinhold, 46414 Rhede (DE); Lelie, Christoph, 45136 Essen (DE); Lubosch, Artur, 46537 Dinslaken (DE)
(74) Vertreter: DREISS Patentanwälte PartG mbB

(57) **Zusammenfassung**

Eine Schließeinrichtung (10), insbesondere Schließzylinder oder Knaufzylinder, mit einer Sende- und Empfangseinrichtung (12) zur Kontaktierung eines Transponders (14), wobei die Sende- und Empfangseinrichtung (12) ein Sendemodul (16) zur Erzeugung elektromagnetischer Wellen, eine Antenne (22) und eine Steuereinheit (26) aufweist, wobei das Sendemodul (16) elektrisch mit der Antenne (22) verbunden und durch die Steuereinheit (26) ansteuerbar ist, ist im Hinblick auf einen zuverlässigen und energiesparenden Betrieb mit einfachen konstruktiven Mitteln derart ausgestaltet und weitergebildet, dass ein durch die Steuereinheit (26) ansteuerbares Kommunikationselement (28) zum Auslesen und/oder Beschreiben des Transponders (14) vorgesehen ist, das mit der Antenne (22) verbunden ist und dass die Antenne (22) als gemeinsame Antenne für Sendemodul (16) und Kommunikationselement (28) dient.

Ein Verfahren zur Kontaktierung eines Transponders (14) mit einer Sende- und Empfangseinrichtung (12) einer Schließeinrichtung (10) ist angegeben.

## Beschreibung

Die vorliegende Erfindung betrifft eine Schließeinrichtung mit einer Sende- und Empfangseinrichtung zur Kontaktierung eines Transponders, wobei die Sende- und Empfangseinrichtung ein Sendemodul zur Erzeugung elektromagnetischer Wellen, eine Antenne und eine Steuereinheit aufweist, wobei das Sendemodul elektrisch mit der Antenne verbunden und durch die Steuereinheit ansteuerbar ist. Zudem betrifft die vorliegende Erfindung ein Verfahren zur Kontaktierung eines Transponders mit einer Sende- und Empfangseinrichtung einer Schließeinrichtung, wobei die Sende- und Empfangseinrichtung ein Sendemodul zur Erzeugung elektromagnetischer Wellen, eine Antenne und eine Steuereinheit aufweist, wobei das Sendemodul elektrisch mit der Antenne verbunden und durch die Steuereinheit ansteuerbar ist.

Schließeinrichtungen und Verfahren zur Kontaktierung eines Transponders mit einer Sende- und Empfangseinrichtung einer Schließeinrichtung sind aus dem Stand der Technik bekannt. Dabei dient ein Transponder als elektronischer Schlüssel für eine entsprechende Schließeinrichtung, die auch als elektronisches Schloss bezeichnet werden kann. Mittels einer Sende- und Empfangseinrichtung der Schließeinrichtung kann der Transponder ausgelesen und bei vorliegender Berechtigung die Schließeinrichtung entsprechend betätigt, bspw. geöffnet werden.

Eine Sende- und Empfangseinrichtung und ein entsprechendes Verfahren zur Kontaktierung eines Transponders sind bspw. aus der DE 100 19 657 A1 bekannt. Das dortige Identifikationssystem weist einen Hauptsender mit Hauptantenne und Hauptempfänger sowie einen Hilfssender mit Hilfsantenne und Hilfsempfänger auf. Mittels Hilfssender, Hilfsantenne und Hilfsempfänger wird eine Anwesenheit eines Transponders ermittelt, wobei die Energie des erzeugten Hilfsfeldes verglichen mit dem Hauptfeld gering ist. Bei Vorliegen einer bestimmten Dämpfung des Hilfsfeldes, hervorgerufen durch einen im Hilfsfeld anwesenden Transponder, werden Hauptsender und Hauptempfänger aktiviert, wodurch ein Hauptfeld erzeugt wird, dessen Energie höher ist als die des Hilfsfeldes. Durch das erzeugte Hauptfeld erfolgt ein Auslesen des Transponders.

Bei der bekannten Sende- und Empfangseinrichtung und dem ebenfalls bekannten Verfahren ist von Nachteil, dass diese mit Haupteinheit und Hilfseinheit einen konstruktiv aufwändigen Aufbau aufweist. Dies führt neben hohem Fertigungsaufwand auch zu hohen Herstellkosten der Sendeund Empfangseinrichtung. Durch die hohe Anzahl an zusammenwirkenden Komponenten und erforderlichen Verbindungen steigt zudem die Versagenswahrscheinlichkeit.

Der vorliegenden Erfindung liegt daher die Aufgabe zugrunde, mit einfachen konstruktiven Mitteln einen zuverlässigen und energiesparenden Betrieb einer Schließeinrichtung zu ermöglichen.

Die voranstehende Aufgabe wird durch eine Schließeinrichtung mit den Merkmalen des Anspruchs 1 gelöst. Danach zeichnet sich die Schließeinrichtung dadurch aus, dass ein durch die Steuereinheit ansteuerbares Kommunikationselement zum Auslesen und/oder Beschreiben des Transponders vorgesehen ist, das mit der Antenne verbunden ist, und dass die Antenne als gemeinsame Antenne für Sendemodul und Kommunikationselement dient.

Durch die geringe Anzahl an Komponenten kann der konstruktive Aufwand der Schließeinrichtung gering gehalten werden. Die Sende- und Empfangseinrichtung verwendet eine gemeinsame Antenne für das Detektieren einer Anwesenheit des Transponders und den Auslese-/Schreibvorgang des Transponders, und zwar eine gemeinsame Antenne für Sendemodul und Kommunikationselement. Neben einem energiesparenden Betrieb lässt sich die Sende- und Empfangseinrichtung dadurch baulich mit einer besonders kleinen Schaltung realisieren, so dass die Sende- und Empfangseinrichtung besonders platzsparend an oder in einer Schließeinrichtung angeordnet werden kann, was die Anordnung in der Schließeinrichtung begünstigt. Damit lässt sich auch die Größe der Schließeinrichtung insgesamt reduzieren. Durch die geringe Anzahl an Komponenten ist die Versagenswahrscheinlichkeit gering.

Dadurch, dass das Sendeelement nur periodisch oder intermittierend eingeschaltet und nur während des Detektierens einer Transponderanwesenheit aktiviert ist und eine Aktivierung des Kommunikationselements ganz gezielt bei detektierter Anwesenheit eines Transponders erfolgt, kann mit einfachen konstruktiven Mitteln ein energiesparender und zuverlässiger Betrieb einer Schließeinrichtung realisiert werden.

Unter einem "Kontaktieren eines Transponders" ist eine insbesondere drahtlose Kontaktaufnahme oder Verbindung zu einem Transponder zu verstehen.

Die Sende- und Empfangseinrichtung kann als RFID-Sende- und Empfangseinrichtung oder als RFID-Schreib- und Leseeinheit ausgebildet sein. Ferner kann das Kommunikationselement als RFID-Frontend ausgeführt sein. Bei einem zu detektierenden Transponder kann es sich um einen vorzugsweise passiven RFID-Transponder mit einer Spule handeln. Generell kann der Betrieb nach verschiedenen Übertragungsstandards und bei unterschiedlichen Frequenzen erfolgen, bspw. mittels HF (hohe Frequenzen, 3-30 Megahertz).

Bei der Schließeinrichtung kann es sich um einen elektronischen Schließzylinder, insbesondere um einen elektronischen Knaufzylinder, handeln. Ein solcher Knaufzylinder weist vorzugsweise ein Gehäuse, einen im Gehäuse gelagerten und relativ zum Gehäuse rotierbaren Zylinderkern und ein Knaufelement auf. Das Knaufelement lässt sich durch einen Benutzer greifen und - bei vorliegender Berechtigung - relativ zum Gehäuse des Knaufzylinders drehen, so dass durch den Zylinderkern, insbesondere durch einen mit dem Zylinderkern gekoppelten Mitnehmer, ein Schließelement, bspw. ein Schlossriegel, betätigt wird.

Das Knaufelement kann mittels eines Kupplungselements mit dem Zylinderkern gekoppelt sein, wobei durch das Kupplungselement bei vorliegender Berechtigung eine Verbindung zwischen Knaufelement und Zylinderkern herstellbar ist.

Denkbar ist, dass zumindest die Antenne der Sende- und Empfangseinrichtung oder die Sende- und Empfangseinrichtung insgesamt im Knaufelement eines Knaufzylinders angeordnet ist. Dadurch lässt sich eine gute Detektions- und Lese/Schreibreichweite des Transponders erzielen.

Dabei ist vorteilhaft, wenn die Sende- und Empfangseinrichtung zudem einen Detektor aufweist, der elektrisch mit der Antenne verbunden ist. Durch den Detektor kann eine eventuelle Dämpfung des durch das Sendeelement erzeugten Magnetfeldes festgestellt werden. Hiermit kann eine Anwesenheit eines Transponders ermittelt werden.

Weiterhin ist von Vorteil, wenn der Antenne ein Anpassnetzwerk vorgeschaltet ist. Mit anderen Worten ist zwischen Sendemodul, Kommunikationselement und Antenne ein Anpassnetzwerk geschaltet. Somit ist eine möglichst verlustarme Kopplung des Sendemoduls sowie des Kommunikationselements an die Antenne ermöglicht.

Im Konkreten kann das Sendemodul einen Oszillator und einen dem Oszillator nachgeschalteten Treiber aufweisen. Damit kann auf zuverlässige Weise eine elektromagnetische Schwingung erzeugt werden, die durch Zuschalten des Treibers, der zum Speisen der Antenne dient, als magnetisches Wechselfeld im Umkreis der Antenne vorliegt. Der Oszillator kann beispielsweise als Keramik-Resonator ausgebildet sein.

Dabei ist denkbar, dass das Sendemodul periodisch in Intervallen von 0 bis 2 Sekunden, vorzugsweise 0 bis 1 Sekunden, weiter vorzugsweise 250 bis 750 Millisekunden, weiter vorzugsweise 500 Millisekunden, für eine kurze Zeit eingeschaltet ist. Die Einschaltdauer des Sendeelements, insbesondere die gemeinsame Einschaltdauer von Oszillator und Treiberelement, kann 0 bis 100 Mikrosekunden, vorzugsweise 10 bis 70 Mikrosekunden, weiter vorzugsweise 20 bis 60 Mikrosekunden, weiter vorzugsweise 30 Mikrosekunden betragen. Denkbar ist außerdem, dass der Oszillator vor der gemeinsamen Einschaltdauer eine Einschwingzeit benötigt und daher zeitlich vor dem Treiber aktiviert wird. Mit anderen Worten kann der Treiber zeitlich verzögert erst nach dem Oszillator aktiviert werden.

Beispielsweise kann die Steuereinheit, um einen Transponder zu erkennen, den Oszillator periodisch (z.B. alle 500 Millisekunden) für eine gewisse Zeit, beispielsweise 37 Mikrosekunden, zum Schwingen bringen. Von dieser Zeit, insbesondere 37 Mikrosekunden, benötigt der Oszillator eine Einschwingdauer, beispielsweise 7 Mikrosekunden, zum Einschwingen, bis also eine stabile Schwingung vorliegt. Der Treiber zum Speisen der Antenne wird zugeschaltet und die Schwingung liegt als magnetisches Wechselfeld im Umkreis der Antenne vor. Der Oszillator kann beispielsweise 37 Mikrosekunden eingeschaltet sein. Der Treiber kann nach Einschwingen des Oszillators zugeschaltet werden und somit für 30 Mikrosekunden eingeschaltet sein. Das Verhältnis von Schlafdauer (etwa 500 Millisekunden) zu Einschaltdauer (etwa 40 Mikrosekunden) beträgt etwa 10⁴.

In zweckmäßiger Weise können die Antenne, das Sendemodul und der Detektor in einem ersten Betriebsmodus zur Anwesenheitsdetektion eines Transponders dienen. Wie zuvor bereits erläutert, liegt im Umkreis der Antenne ein magnetisches Wechselfeld vor. Da die Antenne der Sende- und Empfangseinrichtung resonant zur Antenne oder Spule eines Transponders ist, entnimmt ein an die Antenne herangeführter Transponder (Abstand von 0 bis etwa 10 Zentimeter) dem magnetischen Wechselfeld Energie, d.h. es kommt zu einer Dämpfung und die Amplitude der Schwingung des Oszillators nimmt ab. Am Detektor kann die Dämpfung erkannt werden, indem die Steuereinheit den Wert misst und auswertet, beispielsweise über einen Analog-Digital-Umsetzer-Eingang. Dabei ist denkbar, dass ein Ausgang des Detektors, der ein Detektorsignal liefert, mit einem Analog-Digital-Umsetzer-Eingang der Steuereinheit verbunden ist.

In vorteilhafter Weise können die Antenne und das Kommunikationselement in einem zweiten Betriebsmodus zum Lesen und/oder Beschreiben des Transponders dienen. Mit anderen Worten teilen sich das Kommunikationselement und das Sendemodul die Antenne und nutzen diese als gemeinsame Antenne, und zwar in unterschiedlichen Betriebsmodi. Somit können auf energiesparende Weise und ohne funktionale Einschränkung mit lediglich einer Antenne und lediglich einem Detektor eine Detektion eines Transponders und ein Auslesen/Beschreiben eines Transponders erfolgen.

Im Konkreten kann die Steuereinheit dazu ausgebildet sein, den ersten und/oder den zweiten Betriebsmodus zu schalten. Somit kann die Steuereinheit zur Steuerung des Kommunikationselements und des Sendemoduls, insbesondere des Treibers und des Oszillators des Sendemoduls, dienen. Dabei ist denkbar, dass die Steuereinheit als Microcontroller ausgebildet ist.

In zweckmäßiger Weise kann die Steuereinheit dazu ausgebildet sein, zuerst den Oszillator und zeitlich verzögert, insbesondere nach einer Einschwingdauer des Oszillators, den Treiber zu aktivieren. Damit wird der Treiber ganz gezielt erst dann aktiviert, sobald am Oszillator eine stabile und nutzbare Schwingung vorliegt. Dies reduziert den Energieverbrauch und begünstigt einen netzunabhängigen Betrieb der Schließeinrichtung, beispielsweise einen Akku- oder Batteriebetrieb.

In vorteilhafter Weise kann ein Energiespeicher, insbesondere eine Batterie oder ein Akku, zur Energieversorgung der Sende- und Empfangseinrichtung vorgesehen sein. Damit ist ein netzunabhängiger Betrieb, d.h. ein Betrieb unabhängig von einem Spannungsnetz, ermöglicht. Dies ermöglicht eine Anordnung der Schließeinrichtung an einem Durchgang, beispielsweise einer Tür, wobei aufgrund der energiesparenden Ausführung der Schaltung, eine hohe Anzahl an Schließvorgängen und eine lange Batterielebensdauer erreichbar sind. Dabei kann der Transponder als passiver Transponder ausgebildet sein, der durch das an der Antenne ausgebildete Magnetwechselfeld mit Energie versorgt wird.

Die eingangs genannte Aufgabe wird auch durch ein Verfahren mit den Merkmalen des nebengeordneten Anspruchs gelöst.

Zur Vermeidung von Wiederholungen sei zur Erreichung der mit diesem Verfahren realisierbaren Vorteile auf die voranstehenden Ausführungen zur Schließeinrichtung verwiesen.

Zur weiteren Ausgestaltung des Verfahrens können die im Zusammenhang mit der Schließeinrichtung erläuterten Maßnahmen dienen, die sich auch in verfahrensmäßiger Hinsicht lesen lassen.

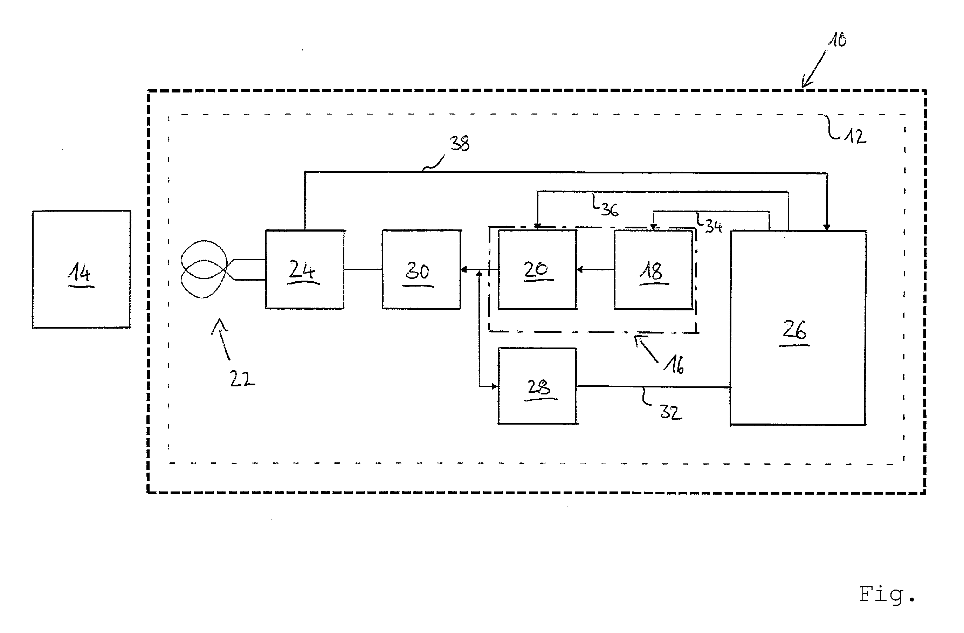

Die Erfindung wird im Folgenden anhand der Figuren näher erläutert. Es zeigt:
- die einzige Fig.: ein schematisches Schaltbild der erfindungsgemäßen Schließeinrichtung.

Die einzige Figur zeigt eine Schließeinrichtung 10 mit einer Sende- und Empfangseinrichtung 12 zur Kontaktierung eines Transponders 14. Die Schließeinrichtung 10 kann als Knaufzylinder ausgebildet sein (nicht dargestellt).

Die Sende- und Empfangseinrichtung 12 weist ein Sendemodul 16 mit einem Oszillator 18 und einem dem Oszillator 18 nachgeschalteten Treiber 20 auf. Der Oszillator 18 kann als Keramik-Resonator ausgebildet sein. Die Sende- und Empfangseinrichtung 12 kann auch als Schreib-/Leseeinheit bezeichnet werden.

Die Sende- und Empfangseinrichtung 12 weist außerdem eine Antenne 22, einen Detektor 24 und eine Steuereinheit 26 auf. Zum Auslesen und/oder Beschreiben des Transponders 14 ist außerdem ein Kommunikationselement 28 vorgesehen. Die Sende- und Empfangseinrichtung 12 weist außerdem ein der Antenne 22 vorgeschaltetes Anpassnetzwerk 30 auf.

Der Oszillator 18 ist mit einem Ausgang elektrisch mit einem Eingang des Treibers 20 verbunden. Ein Ausgang des Treibers 20 ist über das Anpassnetzwerk 30 elektrisch mit der Antenne 22 verbunden. Ein Ausgang des Kommunikationselements 28 ist über das Anpassnetzwerk 30 ebenfalls elektrisch mit der Antenne 22 verbunden. Der Detektor 24 ist elektrisch mit der Antenne 22 verbunden. Die Steuereinheit 26 dient zur Steuerung des Sendemoduls 16 und des Kommunikationselements 28. So ist ein Ausgang der Steuereinheit 26 über erste Leitungen 32, die auch als Kommunikationsverbindung 32 bezeichnet werden können, mit einem Eingang des Kommunikationselements 28 verbunden (aus Übersichtlichkeitsgründen nur als eine Leitung 32 eingezeichnet).

Über eine zweite Leitung 34 ist ein weiterer Ausgang der Steuereinheit 26 mit einem Eingang des Oszillators 18 verbunden. Dabei dient die zweite Leitung 34 als Steuerleitung, mittels der die Steuereinheit 26 den Oszillator 18 einschalten und/oder ausschalten kann.

Über eine dritte Leitung 36, die auch als Steuerleitung dient, ist ein weiterer Ausgang der Steuereinheit 26 mit dem Treiber 20 verbunden. Über die dritte Leitung 36 kann der Treiber 20 durch die Steuereinheit 26 eingeschaltet und/oder ausgeschaltet werden.

Über eine vierte Leitung 38 ist ein Ausgang des Detektors 24 mit einem Eingang der Steuereinheit 26 verbunden. Bei diesem Eingang der Steuereinheit 26 handelt es sich um einen Analog-Digital-Umsetzer-Eingang.

Der Transponder 14 ist als passiv arbeitender RFID-Transponder ausgebildet. Das Kommunikationselement 28 ist als RFID-Frontend ausgebildet. Die Sende- und Empfangseinrichtung 12 kann auch als RFID-Schreib-/Leseeinheit bezeichnet werden.

Die Schließeinrichtung 10 arbeitet folgendermaßen:

Die RFID-Schreib-/Leseeinheit 12 verwendet eine gemeinsame Antenne 22 für das Detektieren eines Transponders 14 und für den Schreib-/Lesevorgang des Transponders 14. Um eine Anwesenheit eines Transponders 14 zu erkennen, bringt die Steuereinheit 26 periodisch, beispielsweise alle 500 Millisekunden, den Oszillator 18 für eine Zeit von beispielsweise 37 Mikrosekunden zum Schwingen. Von den 37 Mikrosekunden benötigt der Oszillator 18 7 Mikrosekunden zum Einschwingen. Ein Einschalten des Oszillators 18 durch die Steuereinheit 26 erfolgt über die zweite Leitung 34.

Nachdem am Oszillator 18 eine stabile Schwingung vorliegt, wird der Treiber 20 zum Speisen der Antenne 22 durch die Steuereinheit 26 zugeschaltet und zwar über die dritte Leitung 36. Die erzeugten elektromagnetischen Schwingungen liegen als magnetisches Wechselfeld im Umkreis der Antenne 22 vor.

Die Antenne 22 der RFID-Lese-/Schreibeinheit 12 ist resonant zur Antenne des Transponders 14 (nicht dargestellt). So entnimmt ein vor die Antenne gehaltener RFID-Transponder 14 dem Oszillator 18 unter dem Schwingkreis Energie, so dass es zu einer Dämpfung kommt und die Amplitude der Schwingung abnimmt. Am Detektor 24 kann diese Dämpfung erkannt werden, indem die Steuereinheit 26 den Wert über einen Analog-Digital-Umsetzer-Eingang misst und intern auswertet. Nach einer definierten gemeinsamen Einschaltzeit von Treiber 20 und Oszillator 18, beispielsweise 30 Mikrosekunden, werden der Treiber 20 und der Oszillator 18 wieder abgeschaltet.

Konnte die Steuereinheit 26 anhand der Auswertung eine Dämpfung erkennen, dass sich ein Transponder 14 in Lesereichweite, beispielsweise einem Abstand von 0 bis zu 10 Zentimetern von der Antenne befindet, wird das Kommunikationselement oder RFID-Frontend 28 eingeschaltet und der Transponder 14 gelesen und/oder beschrieben.

Um den Treiber 20 bzw. das RFID-Frontend oder das Kommunikationselement 28 möglichst verlustarm an die Antenne 22 zu koppeln, ist ein Anpassnetzwerk 30 vorhanden.

## Patentansprüche

1. Schließeinrichtung (10), insbesondere Schließzylinder oder Knaufzylinder, mit einer Sende- und Empfangseinrichtung (12) zur Kontaktierung eines Transponders (14), wobei die Sende- und Empfangseinrichtung (12) ein Sendemodul (16) zur Erzeugung elektromagnetischer Wellen, eine Antenne (22) und eine Steuereinheit (26) aufweist, wobei das Sendemodul (16) elektrisch mit der Antenne (22) verbunden und durch die Steuereinheit (26) ansteuerbar ist, **dadurch gekennzeichnet, dass** ein durch die Steuereinheit (26) ansteuerbares Kommunikationselement (28) zum Auslesen und/oder Beschreiben des Transponders (14) vorgesehen ist, das mit der Antenne (22) verbunden ist und dass die Antenne (22) als gemeinsame Antenne für Sendemodul (16) und Kommunikationselement (28) dient.

2. Schließeinrichtung (10) nach Anspruch 1, **dadurch gekennzeichnet, dass** die Sende- und Empfangseinrichtung (12) zudem einen Detektor (24) aufweist, der elektrisch mit der Antenne (22) verbunden ist.

3. Schließeinrichtung (10) nach einem der vorhergehenden Ansprüche, **dadurch gekennzeichnet, dass** der Antenne (22) ein Anpassnetzwerk (30) vorgeschaltet ist.

4. Schließeinrichtung (10) nach einem der vorhergehenden Ansprüche, **dadurch gekennzeichnet, dass** das Sendemodul (16) einen Oszillator (18) und einen dem Oszillator (18) nachgeschalteten Treiber (20) aufweist.

5. Schließeinrichtung (10) nach einem der Ansprüche 2 bis 4, **dadurch gekennzeichnet, dass** die Antenne (22), das Sendemodul (16) und der Detektor (24) in einem ersten Betriebsmodus zur Anwesenheitsdetektion eines Transponders (14) dienen.

6. Schließeinrichtung (10) nach einem der vorhergehenden Ansprüche, **dadurch gekennzeichnet, dass** die Antenne (22) und das Kommunikationselement (28) in einem zweiten Betriebsmodus zum Lesen und/oder Beschreiben des Transponders (14) dienen.

7. Schließeinrichtung (10) nach Anspruch 5 oder 6, **dadurch gekennzeichnet, dass** die Steuereinheit (26) dazu ausgebildet ist, den ersten und/oder den zweiten Betriebsmodus zu schalten.

8. Schließeinrichtung (10) nach einem der Ansprüche 4 bis 7, **dadurch gekennzeichnet, dass** die Steuereinheit (26) dazu ausgebildet ist, zuerst den Oszillator (18) und zeitlich verzögert, insbesondere nach einer Einschwingdauer des Oszillators (18), den Treiber (20) zu aktivieren.

9. Schließeinrichtung (10) nach einem der vorhergehenden Ansprüche, **dadurch gekennzeichnet, dass** ein Energiespeicher, insbesondere eine Batterie oder ein Akku, zur Energieversorgung der Sende- und Empfangseinrichtung (12) vorgesehen ist.

10. Verfahren zur Kontaktierung eines Transponders (14) mit einer Sende- und Empfangseinrichtung (12) einer Schließeinrichtung (10), insbesondere einer Schließeinrichtung (10) nach einem der vorhergehenden Ansprüche, wobei die Sende- und Empfangseinrichtung (12) ein Sendemodul (16) zur Erzeugung elektromagnetischer Wellen, eine Antenne (22) und eine Steuereinheit (26) aufweist, wobei das Sendemodul (16) elektrisch mit der Antenne (22) verbunden und durch die Steuereinheit (26) ansteuerbar ist, **dadurch gekennzeichnet, dass** ein durch die Steuereinheit (26) ansteuerbares Kommunikationselement (28) zum Auslesen und/oder Beschreiben des Transponders (14) vorgesehen ist, das mit der Antenne (22) verbunden ist und dass die Antenne (22) als gemeinsame Antenne (22) für Sendemodul (16) und Kommunikationselement (28) verwendet wird.

11. Verfahren nach Anspruch 10, **dadurch gekennzeichnet, dass** in einem ersten Betriebsmodus durch intermittierende Ansteuerung des Sendemoduls (16), das durch die Steuereinheit (26) angesteuert wird, an der Antenne (22) intermittierend ein elektromagnetisches Wechselfeld erzeugt wird und zur Anwesenheitsdetektion eines Transponders (14) durch einen mit der Antenne (22) verbundenen Detektor (24) eine Dämpfung des Wechselfeldes überwacht wird, dass bei Überschreiten eines definierten Dämpfungswertes ein zweiter Betriebsmodus aktiviert wird, in welchem das Kommunikationselement (28) angesteuert und der Transponder (14) ausgelesen und/oder beschrieben wird, und dass eine Anwesenheitsdetektion und ein Auslesen und/oder Beschreiben des Transponders (14) mittels der Antenne (22) als gemeinsamer Antenne (22) erfolgt.

12. Verfahren nach Anspruch 10 oder 11, **dadurch gekennzeichnet, dass** das Sendemodul (16) einen Oszillator (18) und einen dem Oszillator (18) nachgeschalteten Treiber (20) aufweist und dass die Steuereinheit (26) zuerst den Oszillator (18) und zeitlich verzögert, insbesondere erst nach einer Einschwingdauer des Oszillators (18), den Treiber (20) aktiviert.
